# FASCICULE DE BREVET EUROPEEN

(11) **EP 0 960 837 B1**
(45) Date de publication et mention de la délivrance du brevet: **09.10.2002**
(21) Numéro de dépôt: 99401236.7
(22) Date de dépôt: 21.05.1999
(51) Int. Cl.: B65G 15/00, B65G 21/20

(54) **Système de convoyage pour le transport d'objects sensiblement cylindriques tels que des pastilles de combustible nucléaire**
Fördersystem zum Transport von im wesentlichen zylindrischen Gegenständen wie Kernbrennstofftabletten
Conveyor system for the conveyance of substantially cylindrical objects such as nuclear fuel pellets

(30) Priorité: 26.05.1998 FR 9806609
(43) Date de publication de la demande: 01.12.1999
(73) Titulaire: COMPAGNIE GENERALE DES MATIERES NUCLEAIRES, 78140 Velizy Villacoublay (FR)
(72) Inventeur: Couzy, Jean, 30130 Pont saint Esprit (FR); Marchand, Michel, 78330 Fontenay le Fleury (FR)
(74) Mandataire: Poulin, Gérard

(56) Documents cités:
- EP-A- 0 385 195
- US-A- 4 304 324
- US-A- 4 410 081
- US-A- 4 468 163

## Description

### Domaine technique

L'invention concerne un système de convoyage conçu pour transporter en mode continu, en file indienne et parallèlement à leur axe dans la direction de leur axe de symétrie, des objets sensiblement cylindriques selon une trajectoire non linéaire contenue dans un plan sensiblement horizontal.

Une application privilégiée bien que non limitative de l'invention concerne le transport de pastilles de combustible nucléaire, notamment lors de leur fabrication en continu.

Les améliorations attendues concernent :
- 1) la diminution des causes de blocage des pastilles, blocages qui diminuent le rendement de la production,
- 2) la diminution du nombre d'interventions par les opérateurs (d'où moindre contamination des personnels concernés),
- 3) minimisation du nombre d'actionneurs en boîte à gants.

### Etat de la technique

Dans une chaîne de fabrication industrielle mettant en oeuvre un procédé continu, le produit en cours d'élaboration est traité par des machines successives, entre lesquelles il est transporté par un système de convoyage adapté à la nature du produit.

Ainsi, lorsqu'il s'agit d'un produit fluide apte à être pompé, son transfert entre les différentes machines assurant son traitement s'effectue grâce à un système de tuyauteries équipées de pompes et de vannes.

Lorsque le produit est composé de pièces unitaires ou constitué par un produit solide en vrac, son transport entre les différentes machines qui assurent son traitement s'effectue au moyen d'un ensemble plus ou moins complexe de convoyeurs successifs. Cet ensemble est conçu en fonction de la nature du produit, du procédé de fabrication, et de la configuration de la ligne de production. Il dépend notamment du positionnement spatial des machines, de leur accessibilité et du degré d'encombrement de l'atelier.

Dans un atelier de production de pastilles de combustible nucléaire, les pastilles frittées, conditionnées en vrac dans des nacelles, sont renversées sur une bande de convoyage alimentant un bol vibrant, puis sont acheminées depuis ce bol vibrant alignées en file indienne jusqu'à une rectifieuse, en suivant une trajectoire sensiblement horizontale mais particulièrement sinueuse, dans un espace réduit et encombré.

Les pastilles de combustible nucléaire sont de forme sensiblement cylindrique et peuvent présenter différents formats. Ainsi, leur diamètre peut varier entre 8,0 mm et 10,5 mm et leur longueur entre 10 mm et 14 mm. Les pastilles sortent du bol vibrant en file indienne et en position couchée, de telle sorte que leur axe soit aligné avec l'axe d'un premier convoyeur placé à la sortie du bol vibrant. Elles sont également introduites dans la rectifieuse en position couchée et alignées en file indienne. Les pastilles doivent donc conserver la même position au cours de leur transfert entre le bol vibrant et la rectifieuse.

Actuellement, ce transfert se fait, lorsqu'un changement de la direction de convoyage est nécessaire grâce à un système complexe de convoyeurs rectilignes successifs de différents types (convoyeurs à bandes, convoyeurs à torons, rails vibrants, etc.). Les différents convoyeurs rectilignes sont reliés entre eux, lors des changements de direction de la trajectoire de convoyage, par des tables de transfert circulaires constituées de disques horizontaux tournant autour de leur axe vertical. Les pastilles sont donc véhiculées par ces convoyeurs et disques de transfert. De plus, dans le cas de convoyeurs à bande, de convoyeurs à simple toron ou de disque de transfert, elles sont maintenues latéralement pendant leur convoyage par un système de guides fixes tout au long de la trajectoire suivie. Etant donné que les pastilles de combustible nucléaire peuvent présenter des dimensions variables d'un modèle à l'autre, l'écartement entre les guides doit pouvoir être réglé à chaque changement de format des pastilles.

Ces systèmes de convoyage existants posent un certain nombre de problèmes dans les cas où des changements de direction sont nécessaires.

En premier lieu, les techniciens de maintenance doivent pouvoir intervenir sur la rectifieuse en respectant les contraintes liées à toute intervention en ambiance contaminée. Ainsi, ils doivent pouvoir accéder aux différentes parties de la rectifieuse, et notamment aux meules, à l'aide des gants équipant une boîte à gant dans laquelle se trouve la machine. En outre, les opérateurs doivent disposer d'une bonne visibilité sur la rectifieuse afin de pouvoir effectuer une surveillance optimale de l'opération de rectification, et notamment de l'alimentation en pastilles de la machine. Pour toutes ces raisons, l'espace situé dans l'axe de l'alimentation de la rectifieuse doit être dégagé au maximum.

Lorsqu'une installation nécessite des changements de direction, les systèmes de convoyage existants possèdent tous l'inconvénient d'une grande complexité qui favorise le blocage des pastilles au niveau des interfaces. Ainsi, chaque changement de format des pastilles se traduit par des réglages longs et minutieux. De plus, de nombreux incidents se produisent en cours de fabrication. Ces incidents ont généralement pour origine des mises en travers des pastilles provoquant des bourrages, notamment au niveau des disques intermédiaires, au niveau des transferts convoyeurs-rails vibrants et au niveau du transfert des pastilles sur la réglette d'alimentation de la rectifieuse. La diversité des systèmes de convoyage rend également les opérations de réglage particulièrement délicates. En résumé, tous ces inconvénients se traduisent par une diminution importante de productivité et par un surcoût d'exploitation de la ligne de production.

Par ailleurs, chaque blocage de pastille nécessite l'intervention d'un opérateur à l'aide de gants, d'où un risque de contamination des opérateurs lié à la nature des produits véhiculés et à la fréquence des interventions.

### Exposé de l'invention

L'invention a précisément pour objet un système de convoyage de conception originale, permettant de transférer en file indienne et parallèlement à leur axe des objets sensiblement cylindriques selon une trajectoire sinueuse quelconque, dans un plan sensiblement horizontal en mettant en oeuvre un minimum de systèmes de convoyage, de manière particulièrement simple, fiable et peu coûteuse, en libérant au mieux l'espace environnant.

Conformément à l'invention, ce résultat est obtenu au moyen d'un système de convoyage, pour le transport en file indienne et selon la direction de leur axe principal, d'objets sensiblement cylindriques, selon une trajectoire non linéaire contenue dans un plan sensiblement horizontal, caractérisé par le fait qu'il comprend :
- une bande sans fin montée sur des poulies d'axes perpendiculaires audit plan, de façon à supporter les objets par un bord supérieur de la bande, et à les transporter selon ladite trajectoire ;
- des moyens de guidage des objets selon ladite trajectoire, au-dessus du bord supérieur de la bande.

Dans certains cas, le convoyeur à bande verticale pourrait être remplacé par un convoyeur monofil torique, particulièrement lorsque les distances entre les points de changement de direction successifs sont faibles. Le convoyeur à bande verticale reste cependant le meilleur choix pour les distances plus longues (meilleure rigidité - moindre risque d'élongation - possibilité de crantage.

Du fait que la bande sans fin est disposée sensiblement verticalement et transporte les objets sur son bord supérieur, le transfert de ces objets selon une trajectoire sinueuse éventuellement complexe peut se faire à l'aide d'une seule bande disposée suivant cette trajectoire. L'ensemble du système de convoyage est ainsi grandement simplifié. Sa fiabilité est augmentée, sa maintenance et son coût sont donc notablement réduits par rapport aux systèmes de convoyage utilisés dans l'art antérieur. Les interventions générées par la mise en travers des objets lors de leur transfert sont globalement diminuées.

Dans une forme de réalisation préférée de l'invention, les moyens de guidage comprennent des guides placés de part et d'autre de la trajectoire qui doit être suivie par les objets. Ces guides définissent de préférence entre eux un écartement apte à être réglé selon la dimension des objets à transporter.

Le bord supérieur de la bande sans fin, sur lequel reposent les objets, peut notamment être droit et présenter une largeur inférieure au diamètre des objets à transporter.

Le défilement de la bande sans fin selon la trajectoire non linéaire suivie par les objets est assuré par des moyens d'entraînement qui agissent sur l'une des poulies, dite poulie d'entraînement. Afin d'éviter tout glissement, cette poulie d'entraînement présente alors une denture en prise sur une surface intérieure crantée de la bande sans fin.

Avantageusement, le convoyeur selon l'invention inclut un poste de chargement des objets en continu. Ce poste de chargement comprend alors une bande de chargement qui présente une face supérieure apte à supporter les objets, mobile selon un trajet rectiligne, à côté, parallèlement et dans le même sens que la bande sans fin, dans une partie rectiligne de la trajectoire suivie par les objets.

Dans ce cas, la face supérieure de la bande de chargement est située de préférence dans un plan en pente légèrement descendante dans le sens de l'avance des objets, de façon à couper le plan contenant le bord supérieur de la bande sans fin, selon une ligne d'intersection située dans la partie rectiligne précitée de la trajectoire.

Des guides de chargement sensiblement rectilignes sont alors, de préférence, centrés au-dessus de la bande de chargement, en amont de la ligne d'intersection des plans et au-dessus de la bande sans fin en aval de cette ligne, de façon à transférer progressivement les objets de la bande de chargement sur la bande sans fin.

Afin d'éviter le bourrage des objets, la vitesse d'avance de la bande sans fin est alors supérieure à la vitesse d'avance de la bande de chargement.

Dans une application préférée de l'invention, les objets à transporter sont des pastilles de combustible nucléaire destinées à être usinées dans une rectifieuse, entre une meule d'entraînement et une meule abrasive dont les axes sont parallèles et situés dans un même plan sensiblement horizontal. Le convoyeur inclut alors un poste d'acheminement des pastilles dans la rectifieuse, qui comprend une réglette rectiligne placée dans le prolongement d'une autre partie rectiligne de la bande sans fin, se prolongeant entre les meules dans le sens de l'avance des pastilles, et dont une face supérieure est inclinée latéralement vers la meule d'entraînement.

De préférence, une extrémité de la réglette adjacente à la bande sans fin épouse la forme de celle-ci.

### Brève description des dessins

On décrira à présent, à titre d'exemple non limitatif, une forme de réalisation préférée de l'invention, en se référant aux dessins annexés, dans lesquels :
- la figure 1 est une vue de dessus, illustrant de façon très schématique l'acheminement de pastilles de combustible nucléaire jusqu'à une rectifieuse, au moyen d'un système de convoyage conforme à l'invention ;
- la figure 2 est une section, à plus grande échelle, selon la ligne II-II de la figure 1 ;
- la figure 3 est une vue de dessus qui représente à plus grande échelle une partie du système de convoyage selon l'invention, incluant un poste de chargement des pastilles ;
- la figure 4 est une vue de côté selon la flèche IV sur la figure 3 ;
- la figure 5 est une vue de dessus illustrant plus en détail une autre partie du système de convoyage selon l'invention, incluant un poste d'acheminement des pastilles dans la rectifieuse ; et
- la figure 6 est une vue en coupe à plus grande échelle selon la ligne VI-VI sur la figure 5.

### Description détaillée d'une forme de réalisation préférée de l'invention

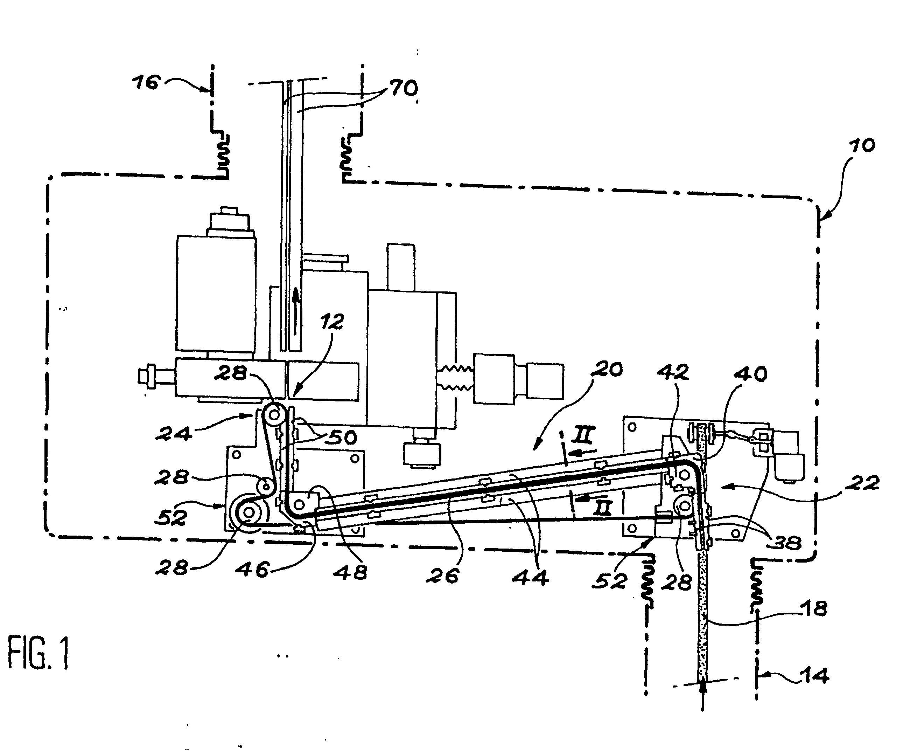

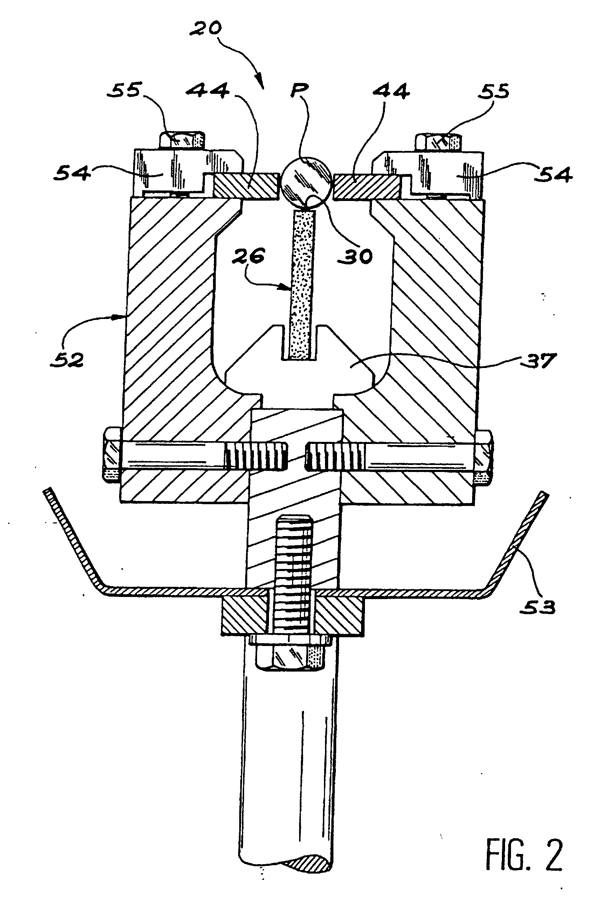

Sur la figure 1, on a représenté schématiquement en traits mixtes une boîte à gants 10 à l'intérieur de laquelle s'effectue l'une des étapes d'un procédé de fabrication de pastilles P (figures 2, 4, 5 et 6) de combustible nucléaire. Cette étape correspond à une opération de rectification de la surface extérieure cylindrique des pastilles P. Elle intervient après une opération de frittage.

L'opération de rectification est effectuée au moyen d'une rectifieuse 12 placée à l'intérieur de la boîte à gants 10. La rectifieuse 12 ne fait pas partie de l'invention et peut être réalisée de façon quelconque, sans sortir du cadre de l'invention.

La boîte à gants amont (non représentée) communique avec la boîte à gants 10 par un tunnel dont la partie adjacente à la boîte à gants 10 est illustrée schématiquement en 14 sur la figure 1. Afin de réduire au maximum l'encombrement de l'ensemble de l'installation et pour faciliter les interventions sur la rectifieuse 12, l'axe du tunnel 14 est parallèle à l'axe de travail de la rectifieuse, mais décalé latéralement sur une distance relativement importante par rapport à cet axe de travail.

On a aussi représenté schématiquement sur la figure 1 la partie adjacente à la boîte à gant 10 d'un autre tunnel 16, par lequel les pastilles sortant de la rectifieuse 12 sont acheminées dans une autre boîte à gants (non représentée) située en aval et dans laquelle une autre machine est implantée. Dans ce cas, l'axe du tunnel 16 est confondu avec l'axe de travail de la rectifieuse 12.

L'usinage en continu des pastilles P dans la rectifieuse 12 nécessite de les introduire en file indienne et en position couchée, c'est-à-dire avec leurs axes disposés horizontalement et alignés.

Afin d'assurer le respect de ces conditions lors de l'alimentation de la rectifieuse 12, les pastilles se trouvent déjà dans cette position, c'est-à-dire avec leurs axes alignés et horizontaux, lorsqu'elles pénètrent dans la boîte à gants 10 par le tunnel 14.

De façon plus précise, les pastilles sont distribuées dans cette position par un bol vibrant (non représenté) implanté dans la boîte à gants (non représentée) placée en amont du tunnel 14. Le bol vibrant dépose les pastilles sur une bande de chargement 18 qui chemine dans le tunnel 14 et amène les pastilles P à l'intérieur de la boîte à gants 10.

Un système de convoyage, désigné de façon générale par la référence 20 sur la figure 1, achemine ensuite les pastilles jusqu'à l'entrée de la rectifieuse 12, à l'intérieur de la boîte à gants 10. Ce système de convoyage 20 assure le transfert des pastilles P selon une trajectoire non linéaire relativement sinueuse en vue de dessus, et contenue dans un plan sensiblement horizontal. D'un bout à l'autre de cette trajectoire, le système de convoyage 20 maintient les pastilles P dans la position qu'elles présentent à la sortie du bol vibrant et qu'elles doivent présenter à l'entrée de la rectifieuse 12, c'est-à-dire en file indienne et avec leurs axes sensiblement horizontaux et alignés.

Le système de convoyage 20 comprend un interface de chargement 22 permettant la prise en compte des pastilles P arrivant en continu d'un convoyeur 18 unique en boucle continue, ainsi qu'une interface de transfert 24 permettant l'acheminement des pastilles dans la rectifieuse 12.

Conformément à l'invention et comme l'illustrent notamment les figures 1 à 4, le convoyeur unique en boucle continue du système de convoyage 20 comprend une seule bande sans fin 26, montée sur des poulies d'axes sensiblement verticaux, toutes désignées par une même référence 28 sur les figures. La bande sans fin 26 est donc disposée sensiblement verticalement, ce qui lui permet de suivre, sur une partie de son parcours, la trajectoire non linéaire et sensiblement horizontale qui doit être suivie par les pastilles à l'intérieur de la boîte à gants 10. Grâce à cette caractéristique, il n'est donc pas nécessaire d'utiliser plusieurs convoyeurs successifs, comme le font les systèmes de convoyage existants.

Comme l'illustre notamment la figure 2, la bande sans fin 26 présente un bord supérieur 30 plan et horizontal, sur lequel reposent les pastilles P. Plus précisément, chaque pastille cylindrique P repose par une génératrice du cylindre sur le bord supérieur 30 de la bande sans fin 26, de façon telle que son axe soit en permanence tangent à la trajectoire non linéaire suivie par la bande sans fin, dans la partie de son parcours servant à supporter les pastilles.

La bande sans fin 26 présente une section rectangulaire dont la largeur, qui correspond à la largeur du bord supérieur 30, est inférieure au diamètre des pastilles P.

Il est à noter qu'en variante, au lieu d'être plan comme on l'a représenté sur la figure 2, le bord supérieur 30 de la bande sans fin 26 peut présenter un profil légèrement concave tourné vers le haut. Les pastilles cylindriques P sont donc naturellement positionnées au fond de la concavité, sous l'effet de leur propre poids. Leur plan de symétrie vertical est alors pratiquement confondu avec le plan médian vertical de la bande sans fin 26.

Le défilement de la bande sans fin 26 est assuré par des moyens d'entraînement constitués par un moteur unique (non représenté) entraînant en rotation, en continu et à une vitesse uniforme, l'une quelconque des poulies 28 dite "poulie d'entraînement". Cet agencement permet de réduire au strict minimum les opérations de maintenance sur le système de convoyage 20.

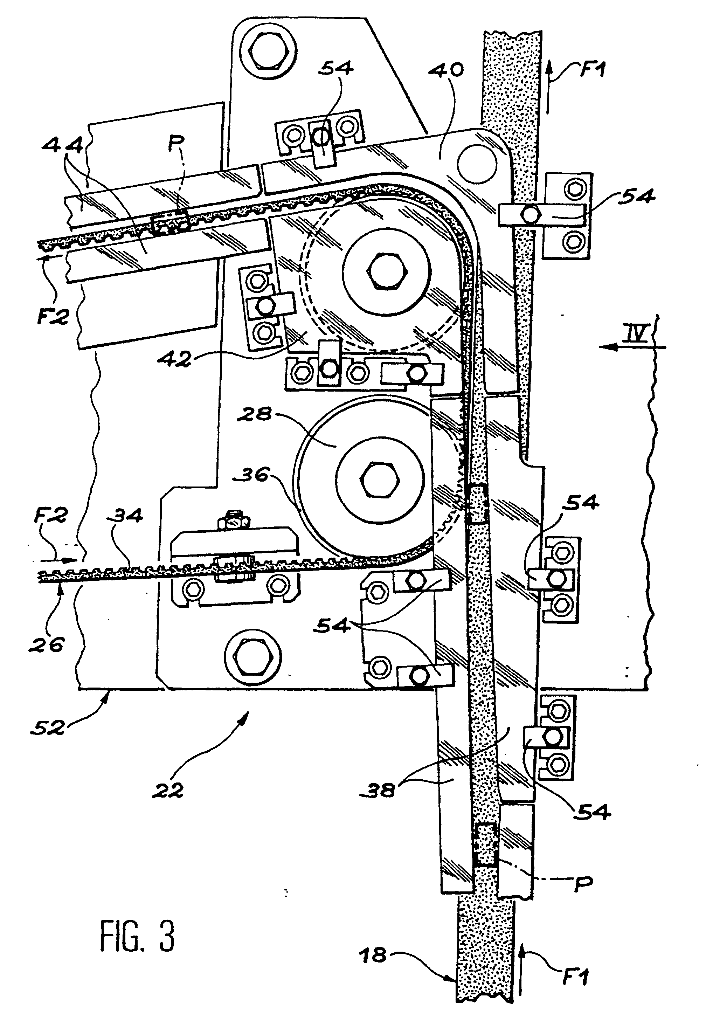

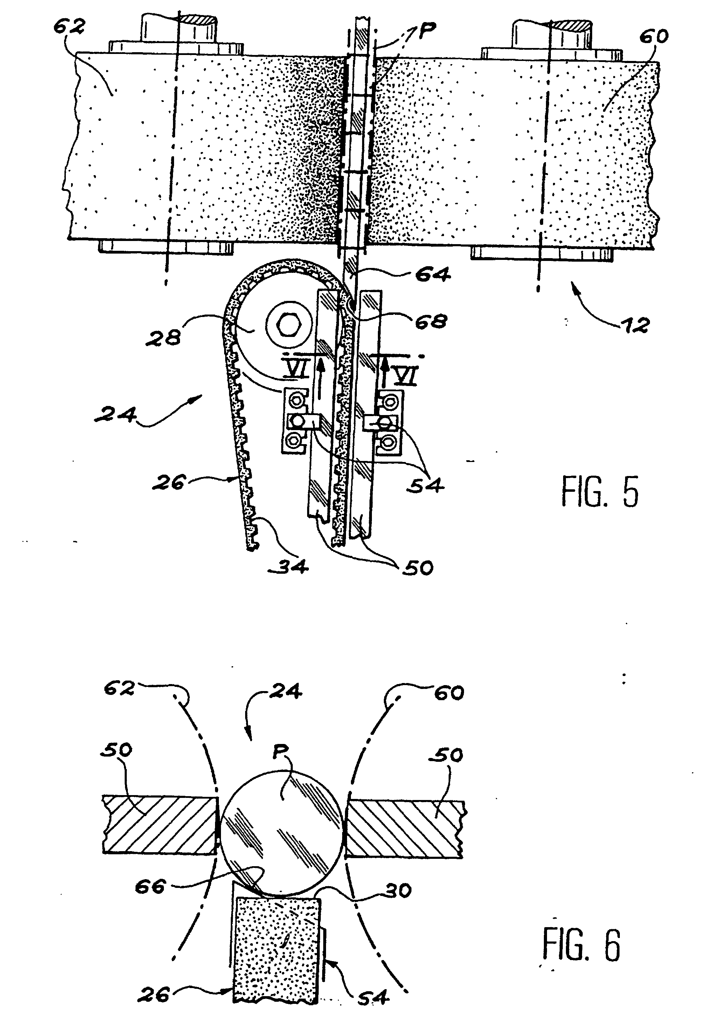

Afin d'éviter tout glissement relatif entre la bande sans fin 26 et la poulie d'entraînement, la bande sans fin présente avantageusement une surface intérieure crantée 34, comme l'illustrent les figures 3 et 5. La poulie d'entraînement 28 comporte alors une denture complémentaire, en prise avec les crans formés sur la surface intérieure 34 de la bande sans fin.

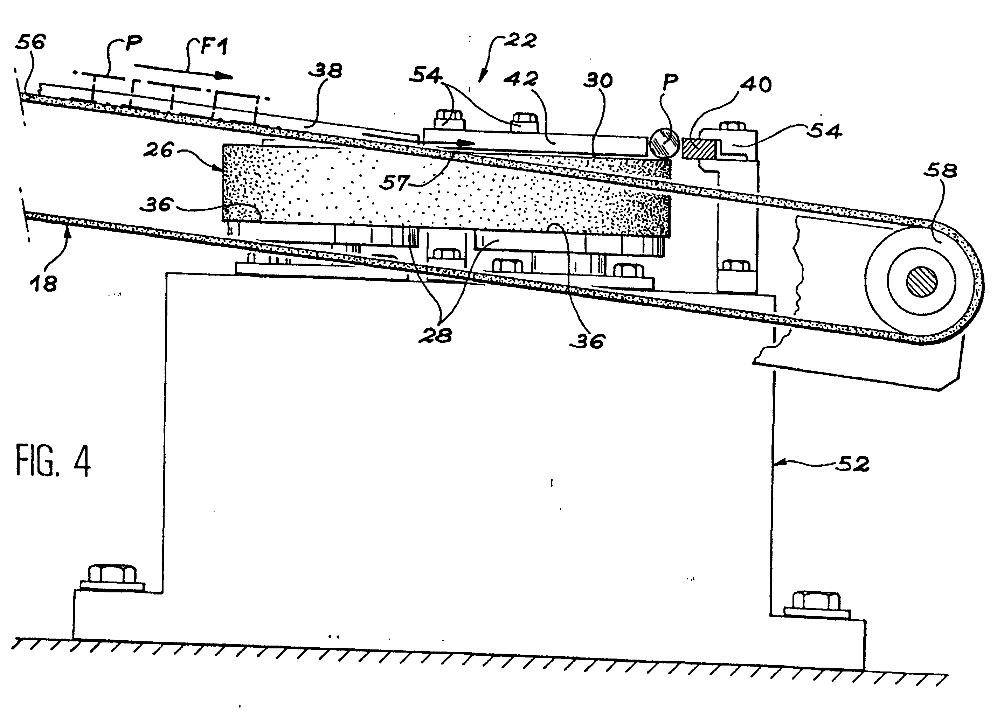

Des moyens sont également prévus pour maintenir la bande sans fin 26 dans une position sensiblement verticale invariable. Ces moyens peuvent notamment être prévus entre la bande sans fin 26 et les poulies 28. Ils comprennent alors, par exemple, des épaulements 36 (figures 3 et 4) formés sur les poulies 28 et contre lesquels est en appui le bord inférieur de la bande sans fin 26. Comme on l'a illustré sur la figure 2, les moyens de maintien de la bande sans fin peuvent aussi comprendre des supports en U 37, sur lesquels repose le bord inférieur de la bande.

Le système de convoyage 20 conforme à l'invention comprend de plus des moyens de guidage, permettant de maintenir les pastilles sur le bord supérieur 30 de la bande sans fin 26, le long de la trajectoire qu'elles doivent parcourir à l'intérieur de la boîte à gants 10.

Ces moyens de guidage comprennent des guides latéraux qui sont placés de part et d'autre de la trajectoire suivie par les pastilles P, sur toute la longueur de celle-ci, à un niveau situé au-dessus du bord supérieur 30 de la bande 26. Le niveau des guides latéraux est tel que chacune des pastilles P soit en contact avec ces guides, au niveau de son axe, à tout endroit de sa trajectoire et quel que soit le type de pastilles transporté.

Plus précisément, dans le cas de la trajectoire approximativement en forme de Z illustrée sur la figure 1, les moyens de guidage comprennent, dans le sens du déplacement des pastilles, une première paire de guides rectilignes 38 (figures 1 et 3), une première paire de guides en arc de cercle extérieur 40 et intérieur 42 (figures 1 et 3), une deuxième paire de guides rectilignes 44 (figures 1 et 2), une deuxième paire de guides en arc de cercle extérieur 46 et intérieur 48 (figure 1) et une troisième paire de guides rectilignes 50 (figures 1, 4 et 5). Les guides 38, 40 et 42 appartiennent au poste de chargement 22 et les guides 50 appartiennent au poste 24 d'acheminement des pastilles P dans la rectifieuse 12.

Tous les guides 38, 40, 42, 44, 46, 48 et 50 sont montés sur un même châssis fixe 52 au moyen de pinces 54 liées au châssis par des vis 55. Ces vis 55 peuvent être déserrées afin de débloquer les pinces 54 et de libérer les guides 44 pour en régler l'écartement, lorsque le diamètre des pastilles P en cours de fabrication est modifié. Un réglage aisé de l'écartement des guides est ainsi possible.

Il est à noter que l'écartement entre les différents guides est déterminé afin d'éviter tout risque de chute ou de mise en travers des pastilles par rapport à leur direction de déplacement durant leur transfert, notamment au niveau du poste 24 d'acheminement des pastilles dans la rectifieuse.

Par ailleurs, les frottements des pastilles sur les guides sont minimes et n'entraînent qu'une usure négligeable.

Une goulotte 53 (figure 2) peut toutefois être prévue sous la bande sans fin 26, tout au long de la trajectoire suivie par les pastilles P, pour récupérer des fractions ou miettes éventuellement détachées de celles-ci et éviter leur dispersion sur le plancher de la boîte à gants.

Dans les parties courbes de la trajectoire suivie par les pastilles, les guides extérieurs 40 et 46 obligent les pastilles à suivre la trajectoire imposée, alors que les guides intérieurs 42 et 48 empêchent la mise en travers des pastilles sur le convoyeur et le bourrage qui s'en suivrait.

Les moyens de guidage ont donc pour effet de maintenir les pastilles cylindriques dans une position telle que leur axe soit toujours sensiblement tangentiel à la trajectoire suivie.

On décrira à présent plus en détail le poste 22 de chargement en continu des pastilles cylindriques P sur la bande sans fin 26, en se référant aux figures 3 et 4.

Ce poste de chargement 22 comprend la bande de chargement 18, par laquelle les pastilles P sont acheminées dans la boîte à gants 10 au travers du tunnel 14.

Plus précisément, les pastilles P reposent en file indienne et avec leurs axes alignés sur la face supérieure 56 (figure 4) de la bande de chargement 18. Celle-ci est montée de façon conventionnelle sur des poulies d'axe sensiblement horizontal, dont l'une est illustrée en 58 sur la figure 4. Des guides rectilignes associés (non représentés) assurent le maintien latéral des pastilles sur la face supérieure 56 de la bande de chargement 18, jusqu'à proximité de l'interface de transfert 22.

La face supérieure 56 de la bande de chargement 18 se déplace selon un trajet rectiligne symbolisé par les flèches F1 sur les figures 2 et 3, à côté de la bande sans fin 26, dans une partie rectiligne de sa trajectoire correspondant au poste de chargement 22. Comme le montre en particulier la figure 3, le bord de la bande de chargement 18 adjacent à ladite partie rectiligne de la bande sans fin 16 forme avec la surface extérieure de celle-ci un jeu fonctionnel réduit, en vue de dessus.

La face supérieure 56 de la bande de chargement 18 se déplace parallèlement et dans le même sens que le bord supérieur 30 de la partie rectiligne précitée de la bande sans fin 26. Toutefois, la vitesse d'avance de la bande sans fin 26 (flèches F2 sur la figure 3) est, de préférence, légèrement supérieure à celle de la bande de chargement 18, afin d'éviter tout risque de bourrage lorsque les pastilles P sont transférées de la bande 18 à la bande 26.

Afin que le transfert puisse se faire et comme l'illustre plus précisément la figure 4, la face supérieure 56 de la bande de chargement 18 est située dans un plan en pente légèrement descendante dans le sens de l'avance des pastilles P, symbolisé par la flèche F1. Ce plan coupe celui qui contient le bord supérieur 30 de la bande sans fin 26 selon une ligne d'intersection 57 située dans la zone centrale de la partie rectiligne de sa trajectoire située au niveau du poste de chargement 22.

De plus et comme l'illustre plus précisément la figure 3, les guides rectilignes 38 ainsi que la partie d'entrée des guides 40 et 42 forcent les pastilles à suivre une trajectoire sensiblement rectiligne dont le point de départ est centré au-dessus de la bande de chargement 18 et dont le point d'arrivée est centré au-dessus de la bande sans fin 26. Plus précisément, les points de départ et d'arrivée de cette trajectoire sensiblement rectiligne sont situés respectivement en amont et en aval de la ligne d'intersection 57 du plan en pente contenant la face supérieure 56 de la bande de chargement 18 et du plan sensiblement horizontal contenant le bord supérieur 30 de la bande sans fin 26.

Grâce à l'agencement qui vient d'être décrit, les pastilles couchées transportées en file indienne sur la bande de chargement 18 sont progressivement poussées vers le côté de cette bande sur lequel se trouve la bande sans fin 26, puis amenées au-dessus de cette dernière. Lorsque les pastilles se trouvent approximativement à cheval sur les deux bandes, leur appui est transféré de la face supérieure 56 de la bande de chargement 18 sur le bord supérieur 30 de la bande sans fin 26, dès le franchissement de la ligne d'intersection 57. Le chargement des pastilles en position couchée et en file indienne sur le bord supérieur 30 de la bande sans fin 26 est ainsi assuré sans discontinuité et sans risque de bourrage, du fait de la vitesse légèrement supérieure de la bande sans fin 26.

On décrira à présent le poste 24 d'acheminement des pastilles P dans la rectifieuse 12, en se référant aux figures 5 et 6.

Comme l'illustrent ces figures, la rectifieuse comprend une meule d'entraînement 60, ainsi qu'une meule abrasive 62, dont les axes sont disposés parallèlement l'un à l'autre dans un plan sensiblement horizontal. Comme le montre la figure 6, les axes des pastilles P se trouvent légèrement en dessous de ce plan lorsque la surface périphérique de celles-ci est usinée. Le bord supérieur 30 de la bande sans fin 26 se trouve donc dans un plan sensiblement horizontal décalé vers le bas par rapport au plan contenant l'axe des meules. Ce décalage permet d'assurer un positionnement satisfaisant des pastilles dans la rectifieuse quel que soit le diamètre des pastilles en cours de fabrication.

Au niveau du poste 24 d'acheminement des pastilles dans la rectifieuse, la bande sans fin 26 présente une partie rectiligne dont le plan vertical médian est confondu avec le plan de symétrie des axes des meules 60 et 62. Au-delà de cette partie rectiligne, la bande sans fin 26 s'échappe latéralement sous la forme d'une partie courbe reçue sur l'une des poulies 28 (figure 5).

Le transfert des pastilles depuis la partie rectiligne de la bande sans fin 26 jusqu'à la région située entre les meules 60 et 62, puis au-delà de celle-ci, s'effectue au moyen d'une réglette rectiligne 64 placée dans le prolongement de la partie rectiligne précitée de la bande sans fin 26.

Plus précisément, cette réglette 64 présente un bord supérieur 66 placé sensiblement au même niveau que le bord supérieur 30 de la bande sans fin 26, mais incliné latéralement vers la meule d'entraînement 60, comme l'illustre la figure 6. Cet agencement permet d'amener automatiquement la surface périphérique de chacune des pastilles P en contact avec la meule d'entraînement 60, quel que soit le diamètre de la pastille.

Comme le montre en particulier la figure 5, l'extrémité d'entrée 68 de la réglette 64, tournée vers la bande sans fin 26, présente une forme courbe et approximativement en biseau en vue de dessus. Cette extrémité 68 qui épouse étroitement la forme de la partie adjacente incurvée de la bande sans fin 26, qui prolonge la partie rectiligne de celle-ci au-delà de laquelle les pastilles sont transférées sur la réglette 64.

De part et d'autre des meules 60 et 62, c'est-à-dire à l'entrée comme à la sortie de la rectifieuse 12, les pastilles P sont positionnées latéralement par des guides rectilignes. Ces guides sont constitués par les guides 50 décrits précédemment à l'entrée de la rectifieuse et par des guides 70 à la sortie de celle-ci et dans le tunnel 16 (figure 1).

Bien entendu, l'invention n'est pas limitée à un système de convoyage destiné au transport de pastilles de combustible nucléaire. Elle peut également s'appliquer au transport en file indienne et en position couchée de tous objets sensiblement cylindriques présentant approximativement un diamètre maximal uniforme. De plus, n'ont été mentionnées et illustrées jusqu'ici que des bandes sans fin à section sensiblement rectangulaire, de grande largeur par rapport à l'épaisseur ; d'autres sections de bande sont possibles, et on pourrait même conduire les pastilles ou les autres objets sur des bandes à section oblongue ou torique (c'est-à-dire des fils) sans modification importante du reste de l'installation. Il faudrait simplement éviter les interférences entre les poulies d'entraînement et les objets transportés, par exemple en disposant les poulies au-dessous de la face supérieure de la bande ou en les façonnant avec des gorges à côté de cette face supérieure. Les sections plus petites apporteront de la souplesse à la bande, ce qui rendra son installation, son extration et son remplacement plus aisés et plus appréciés pour des trajets sinueux ; si réciproquement les objets transportés doivent parcourir des trajets aux grandes longueurs libres entre les poulies, on préférera l'emploi de bandes de grande longueur (ou de grande hauteur) à cause de leur meilleure rigidité.

## Revendications

1. Système de convoyage, pour le transport en mode continu en file indienne et dans le sens de leur plus grand axe d'objets (P) sensiblement cylindriques, selon une trajectoire non linéaire contenue dans un plan sensiblement horizontal, **caractérisé par le fait qu'**il comprend :
- une bande sans fin (26) montée sur des poulies (28) d'axes perpendiculaires audit plan, de façon à supporter les objets (P) par un bord supérieur (30) de la bande, et à les transporter selon ladite trajectoire ;
- des moyens de guidage (38,40,42,44,46,48,50) des objets (P) selon ladite trajectoire, au-dessus du bord supérieur (30) de la bande (26).

2. Système de convoyage selon la revendication 1, dans lequel les moyens de guidage comprennent des guides (38,40,42,44,46,48,50) placés de part et d'autre de la trajectoire.

3. Système selon la revendication 2, dans lequel les guides (38,40,42,44,46,48,50) définissent entre eux un écartement réglable selon la dimension des objets (P) à transporter.

4. Système de convoyage selon l'une quelconque des revendications précédentes, dans lequel le bord supérieur (30) de la bande sans fin (26) est droit et présente une largeur inférieure au diamètre des objets (P) à transporter.

5. Système de convoyage selon l'une quelconque des revendications précédentes, dans lequel des moyens d'entraînement agissent sur une première des poulies (28).

6. Système de convoyage selon la revendication 5, dans lequel la bande sans fin (26) présente une surface intérieure crantée (34), en prise avec une denture formée sur la première poulie.

7. Système de convoyage selon l'une quelconque des revendications précédentes, dans lequel un poste (32) de chargement en continu comprend une bande de chargement (18) présentant une face supérieure (56) apte à supporter les objets (P), mobile selon un trajet rectiligne, à côté, parallèlement et dans le même sens que la bande sans fin (26), dans une partie rectiligne de ladite trajectoire.

8. Système de convoyage selon la revendication 7, dans lequel la face supérieure (56) de la bande de chargement (18) est située dans un plan en pente légèrement descendante dans le sens de l'avance des objets (P), de façon à couper le plan contenant le bord supérieur (30) de la bande sans fin (26), selon une ligne d'intersection (57) située dans ladite partie rectiligne de la trajectoire.

9. Système de convoyage selon la revendication 8 combinée avec l'une quelconque des revendications 2 et 3, dans lequel des guides de chargement (38) sensiblement rectilignes sont centrés au-dessus de la bande de chargement (18) en amont de la ligne d'intersection (57) desdits plans, et au-dessus de la bande sans fin (26) en aval de cette ligne, de façon à transférer progressivement les objets (P) de la bande de chargement sur la bande sans fin.

10. Système de convoyage selon l'une quelconque des revendications 7 à 9, dans lequel la vitesse d'avance de la bande sans fin (26) est supérieure à la vitesse d'avance de la bande de chargement (18).

11. Système de convoyage selon l'une quelconque des revendications précédentes, dans lequel les objets à transporter sont des pastilles (P) de combustible nucléaire à usiner entre une meule d'entraînement (60) et une meule abrasive (62) d'une rectifieuse (12), d'axes parallèles et situés dans un même plan sensiblement horizontal, un poste (24) d'acheminement des pastilles dans la rectifieuse comprenant une réglette rectiligne (64) placée dans le prolongement d'une autre partie rectiligne de la bande sans fin (26), se prolongeant entre les meules (60,62) dans le sens de l'avance des pastilles, et dont une face supérieure est inclinée latéralement vers la meule d'entraînement (60).

12. Système de convoyage selon la revendication 11, dans lequel une extrémité (68) de la réglette (64) adjacente à la bande sans fin (26) épouse la forme de celle-ci.

## Patentansprüche

1. Fördersystem zum kontinuierlichen Transport von im Wesentlichen zylindrischen Gegenständen (P) in Reihe und in der Richtung ihrer größeren bzw. größten Achse gemäß einer nichtlinearen Bahn, enthalten in einer im Wesentlichen horizontalen Ebene,
**dadurch gekennzeichnet, dass** es umfasst:
- ein Endlosband (26), das über Rollen (28) mit zu der genannten Ebene senkrechten Achsen läuft, wobei die Gegenstände (P) durch einen oberen Rand (30) des genannten Bands getragen werden, das sie gemäß der genannten Bahn transportiert;
- Führungseinrichtungen (38, 40, 42, 44, 46, 48, 50) der Gegenstände (P) gemäß der genannten Bahn, über dem oberen Rand (30) des Bands (26).

2. Fördersystem nach Anspruch 1, bei dem die Führungseinrichtungen Führungen (38, 40, 42, 44, 46, 48, 50) umfassen, die beiderseits der Bahn angeordnet sind.

3. Fördersystem nach Anspruch 2, bei dem die Führungen (38, 40, 42, 44, 46, 48, 50) zwischen sich einen Abstand definieren, der entsprechend der Größe der zu transportierenden Gegenstände (P) einstellbar ist.

4. Fördersystem nach einem der vorangehenden Ansprüche, bei dem der obere Rand (30) des Endlosbands (26) gerade ist und eine Breite hat, die kleiner ist als der Durchmesser der zu transportierenden Gegenstände (P).

5. Fördersystem nach einem der vorangehenden Ansprüche, bei dem die Antriebseinrichtungen auf eine erste der Rollen (28) wirken.

6. Fördersystem nach Anspruch 5, bei dem das Endlosband (26) eine gezahnte Innenseite (34) aufweist, in die eine auf der ersten Rolle ausgebildeten Verzahnung eingreift.

7. Fördersystem nach einem der vorangehenden Ansprüche, bei dem eine kontinuierliche Ladestation (32) ein Ladeband (18) umfasst, das eine Oberseite (56) zum Tragen der Gegenstände (P) aufweist und sich gemäße einer geradlinigen Bahn bewegt, seitlich des Endlosbands (26), parallel zu diesem und in derselben Richtung, auf einem geradlinigen Stück der Endlosband-Bahn.

8. Fördersystem nach Anspruch 7, bei dem sich die Oberseite (56) des Ladebands (18) in einer entsprechend der Fortbewegungsrichtung der Gegenstände (P) leicht abwärts geneigten Ebene befindet, die diejenige Ebene, die den oberen Rand (30) des Endlosbands (26) enthält, in einer Schnittlinie (57) schneidet, die sich in dem genannten geradlinigen Stück der Bahn befindet.

9. Fördersystem nach Anspruch 8, kombiniert mit einem der Ansprüche 2 und 3, bei dem im Wesentlichen geradlinige Ladeführungen (38) vor der Schnittlinie (57) der genannten Ebenen über dem Ladeband (18) zentriert sind und hinter dieser Schnittlinie über dem Endlosband (26), um die Gegenstände (P) progressiv von dem Ladeband auf das Endlosband zu transferieren.

10. Fördersystem nach einem der Ansprüche 7 bis 9, bei dem die Geschwindigkeit des Endlosbands (26) größer ist als die Geschwindigkeit des Ladebands (18).

11. Fördersystem nach einem der vorangehenden Ansprüche, bei dem die Gegenstände zu bearbeitende Kembrennstofftabletten (P) sind, zu transportieren zwischen eine Antriebsschleifscheibe (60) und eine Schleifscheibe (62) einer Schleifmaschine (12) mit parallelen Achsen und in derselben, im Wesentlichen horizontalen Ebene befindlich, wobei eine Beförderungsstation (24) der Tabletten in die Schleifmaschine eine geradlinige Schiene (64) umfasst, in der Verlängerung eines anderen geradlinigen Teils des Endlosbands (26) befindlich, die sich zwischen den Schleifscheiben (60, 62) in der Fortbewegungsrichtung der Tabletten erstreckt und von der eine obere Fläche seitlich in Richtung Antriebsschleifscheibe (60) geneigt ist.

12. Fördersystem nach Anspruch 11, bei dem ein dem Endlosband (26) benachbartes Ende (68) der Schiene (64) sich an die Form dieses Endlosbands anpasst.

## Claims

1. Conveying system for the continuous conveying in Indian file and in the direction of their greatest axis substantially cylindrical objects (P) in accordance with a non-linear path contained in a substantially horizontal plane, **characterized in that** it comprises:
- an endless belt (26) installed on pulleys (28) having axes perpendicular to said plane, so as to support the objects (P) by an upper edge (30) of the bent and convey them in accordance with said path,
- means (38, 40, 42, 44, 46, 48, 50) for guiding the objects (P) along said path, above the upper edge (30) of the belt (26).

2. Conveying system according to claim 1, wherein the guidance means (38, 40, 42, 44, 46, 48, 50) comprise guides placed on either side of the path.

3. System according to claim 2, wherein the guides (38, 40, 42, 44, 46, 48, 50) define between them a spacing regulatable as a function of the size of the objects (P) to be conveyed.

4. Conveying system according to any one of the preceding claims, wherein the upper edge (30) of the endless belt (26) is straight and has a width smaller than the diameter of the objects (P) to be conveyed.

5. Conveying system according to any one of the preceding claims, wherein driving means act on a first of the pulleys (28).

6. Conveying system according to claim 5, wherein the endless belt (26) has a lower, notched surface (34) meshing with teeth formed on the first pulley.

7. Conveying system according to any one of the preceding claims, wherein a continuous loading station (32) comprises a loading belt (18) having an upper face (56) able to support the objects (P), moving along a rectilinear path, sideways, parallel and in the same direction as the endless belt (26), in a rectilinear portion of said path.

8. Conveying system according to claim 7, wherein the upper face (56) of the loading belt (18) is located in a slightly downward, sloping plane in the advance direction of the objects (P), so as to intersect the plane containing the upper edge (30) of the endless belt (26), along an intersection line (57) located in said rectilinear portion of the path.

9. Conveying system according to claim 8 combined with either of the claims 2 and 3, wherein substantially rectilinear loading guides (38) are centred above the loading belt (18) upstream of the intersection line (57) of said planes and above the endless belt (26) downstream of said line, so as to progressively transfer the objects (P) from the loading belt onto the endless belt.

10. Conveying system according to any one of the claims 7 to 9, wherein the endless belt (26) advance speed exceeds the loading belt (18) advance speed.

11. Conveying system according to any one of the preceding claims, wherein the objects to be conveyed are nuclear fuel pellets (P) to be machined between a driving wheel (60) and an abrasive wheel (62) of a grinder (12), having parallel axes and located in the same substantially horizontal plane, a station (24) for routing pellets into a grinder incorporating a rectilinear strip (64) placed in the extension of another rectilinear portion of the endless belt (26), extending between the wheels (60, 62) in the pellet advance direction and whereof an upper face is laterally inclined towards the driving wheel (60).

12. Conveying system according to claim 11, wherein one end (68) of the strip (64) adjacent to the endless belt (26) adopts the shape of the latter.
